# FASCICULE DE BREVET EUROPEEN

(11) **EP 3 323 554 B1**
(45) Date de publication et mention de la délivrance du brevet: **14.08.2019**
(21) Numéro de dépôt: 17200854.2
(22) Date de dépôt: 09.11.2017
(51) Int. Cl.: B25B 27/00, B29C 63/00

(54) **PERFECTIONNEMENT À UN DISPOSITIF D`APPLICATION D'UN ÉLÉMENT ADHÉSIF SUR UNE SURFACE**
PERFEKTIONIERUNG EINER VORRICHTUNG ZUR AUFBRINGUNG EINES KLEBEELEMENTS AUF EINE OBERFLÄCHE
IMPROVEMENT OF A DEVICE FOR APPLYING AN ADHESIVE ELEMENT TO A SURFACE

(30) Priorité: 22.11.2016 FR 1661365
(43) Date de publication de la demande: 23.05.2018
(73) Titulaire: ADHEX TECHNOLOGIES, 21300 Chenôve (FR)
(72) Inventeur: DURAND, Hervé, 21000 Dijon (FR); RAPENNE, Emannuel, 21850 Saint-Appolinaire (FR)
(74) Mandataire: Gevers & Orès

(56) Documents cités:
- WO-A1-2010/133917
- DE-B- 1 087 338
- FR-A1- 2 948 303
- FR-A1- 3 006 223

## Description

### Domaine technique

La présente invention concerne un dispositif d'application d'un élément adhésif sur une surface et plus particulièrement un dispositif d'application d'un élément raidisseur de toit d'un véhicule automobile constitué d'au moins une pièce en carton ondulé et une couche adhésive, éventuellement sous la forme de bandes, sensible à la pression.

### Etat de la technique

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allégement portent en priorité sur les pièces métalliques de carrosserie car elles contribuent significativement au poids total des véhicules. Ces efforts d'allégement portent notamment sur le pavillon de toit des véhicules dans la mesure où sa surface est grande et où il ne constitue pas une pièce structurante ou de sécurité en cas de chocs frontal ou latéral.

Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'oeil nu, cette déformation étant accentuée par la brillance et le glacis surfacique de la peinture appliquée sur l'extérieur des pavillons.

Afin de remédier à ces inconvénients, on a déjà imaginé des dispositifs dits raidisseurs de toit généralement constitués d'une plaque en carton ondulé munie d'une couche adhésive sensible à la pression et permettant de limiter la déformation des pavillons de toit notamment.

C'est le cas par exemple de la demande de brevet français FR 2 299 964, des demandes de brevet JP10071646, DE 19702581, JP8332904 et EP 1 298 034, et de la demande de brevet français FR 3 011 519 de la demanderesse.

Ces raidisseurs de toit cartonnés sont appliqués sur la face intérieure du pavillon de toit des véhicules manuellement et une certaine force doit être appliquée sur le raidisseur afin de permettre un parfait encollage sur la face intérieure du pavillon de toit.

A cet effet, un système pneumatique complexe avec tirage sous vide est utilisé. Le système consiste à placer le raidisseur dans un cadre spécifique pourvu de bourrelets périphériques assurant l'étanchéité de l'ensemble après mise en contact avec le pavillon. Ledit cadre est pourvu d'un système de mise en dépression par une pompe à vide permettant d'éliminer l'air situé entre le raidisseur et le pavillon de toit. Lorsqu'un certain degré de dépression est atteint, le raidisseur en carton est suffisamment déformé pour épouser la forme du pavillon de toit, en particulier dans les zones courbes, garantissant ainsi un contact entre les bandes adhésives et le pavillon, ainsi qu'un niveau de compression suffisant sur les bandes adhésives plaquées contre le pavillon de toit.

Ainsi l'opérateur en bord de ligne de montage doit d'abord introduire par une ouverture latérale, par exemple une porte, le cadre spécifique équipé du raidisseur auto-adhésif, le positionner avec précision au droit de la zone du pavillon de toit devant recevoir ledit raidisseur, le plaquer le plus hermétiquement possible sous le pavillon de toit, puis déclencher la mise sous vide et attendre que le pompage de l'air soit suffisant pour atteindre la valeur de pression nécessaire.

Ce type de système de pose présente donc l'inconvénient de nécessiter un grand nombre d'opérations qui sont longues et complexes, ce qui grève le coût de la pose.

Afin de réduire les coûts de pose, de manière alternative, les opérateurs utilisent des dispositifs de pose constitués d'un rouleau monté fou à l'extrémité d'un manche afin d'exercer une pression sur les raidisseurs lors du montage.

Au cours de cette opération, la pression doit être exercée en permanence sur le raidisseur que l'on souhaite monter. Cela provoque une diminution de la performance de l'opérateur réalisant le montage des raidisseurs de toit en raison de la fatigue et du manque d'ergonomie de sorte que, au cours du temps, la qualité du montage diminue ce qui conduit à des défauts, et plus particulièrement à un mauvais encollage des raidisseurs de toit sur la face intérieure des pavillons de toit, conduisant à une mauvaise rigidification desdits pavillons de toit.

Afin de remédier à cet inconvénient, on a déjà imaginé un dispositif de pose procurant une pression suffisante pour assurer une parfaite adhésion de l'élément raidisseur.

C'est le cas notamment de la demande de brevet français FR 2 948 303 qui décrit un outil d'application d'un élément adhésif sur une surface d'application. Ledit outil comprend un organe de préhension, un organe d'application dudit élément adhésif, ledit organe d'application étant constitué d'un arbre et d'un rouleau monté libre en rotation sur ledit arbre, et des moyens de liaison entre l'organe de préhension et l'organe d'application. Lesdits moyens de liaison comprennent un organe support sur lequel l'organe d'application est monté rotatif, des moyens de basculement conçus pour faire basculer l'organe de support entre une position de verrouillage et une position de déverrouillage lorsqu'un couple seuil prédéterminé est appliqué sur l'organe d'application, et un organe de verrouillage conçu pour bloquer en rotation l'organe d'application lorsque ledit organe de support occupe la position de verrouillage et laisser libre en rotation l'organe d'application lorsque ledit organe de support occupe la position de déverrouillage.

Ce type d'outil bien que permettant l'application d'une pression suffisante pour procurer une parfaite adhésion de l'élément raidisseur présente l'inconvénient de ne pas être ergonomique et de nécessiter de la part de l'opérateur un effort physique important de sorte que sa productivité diminue au cours du temps.

Afin de remédier à cet inconvénient, on a déjà imaginé des dispositifs de pose d'éléments adhésifs sur une paroi métallique, tels qu'un raidisseur de toit sur la face intérieure d'un pavillon de toit, ou d'une pièce plastique sur la face intérieure d'une portière d'un véhicule automobile, constitués d'au moins un rouleau magnétique monté fou à l'extrémité d'un manche, la force magnétique procurant une pression constante et suffisante, en lieu et place de l'opérateur, ce dernier n'ayant qu'à assurer le déplacement et le guidage du rouleau magnétique.

C'est le cas notamment des demandes de brevet français FR 2 852 544 et FR 2 874 547 et du brevet européen EP 2 432 624.

Le document FR 2 852 544 décrit une molette magnétique fixée sur une poignée permettant l'application de bandes pelliculaires ou panneaux préencollés sur des surfaces métalliques par action magnétique. Ladite molette est constituée d'une pluralité de joues en acier entre lesquelles sont positionnés des anneaux magnétiques permanents, lesdites joues et les anneaux magnétiques étant montés libre en rotation autour d'un axe solidaire de la poignée.

Le document FR 2 874 547 décrit un dispositif d'application d'un élément sur une surface d'application, notamment d'un élément adhésif sur une surface métallique de porte de véhicule automobile, comprenant un élément de guidage comportant une poignée de préhension et un bras support coudé et solidaire de la poignée, ledit support coudé comprenant un arbre sur lequel sont montées libres en rotation des roues aimantées.

Le document EP 2 432 624 décrit un dispositif à rouleau destiné à être utilisé dans l'industrie automobile pour les pièces de montage montées en pressant sur ces dernières. Le dispositif comporte un manche de préhension coudé, un rouleau monté libre en rotation à l'extrémité libre du manche coudé, ledit rouleau étant un aimant cylindrique recouvert d'un film plastique, et une unité de peinture comportant une substance colorante solidaire du manche et permettant le dépôt de la substance colorante sur l'aimant cylindrique formant le rouleau.

Tous ces outils de pose de l'art antérieur sont plus particulièrement destinés à la pose d'élément sur une portière d'un véhicule automobile et ne sont pas adaptés à la pose d'un raidisseur de toit sur un pavillon de toit d'un véhicule qui présente une surface courbe.

Il existe donc un besoin pour un dispositif d'application d'un élément sur une surface d'application métallique courbe afin de faciliter la pose pour l'opérateur tout en évitant une détérioration de l'élément à poser et/ou de la surface d'application métallique.

### Divulguation de l'invention

L'un des buts de l'invention est donc de remédier à ces inconvénients en proposant un dispositif d'application d'un élément sur une surface d'application de conception simple et peu onéreuse, procurant une pose aisée pour l'opérateur tout en évitant une détérioration de l'élément à poser et/ou de la surface d'application.

A cet effet et conformément à l'invention, il est proposé un dispositif d'application d'un élément adhésif sur une surface d'application, notamment d'un raidisseur de toit auto-adhésif sur la face intérieure d'un pavillon de toit d'un véhicule automobile, comprenant au moins un organe de préhension et un organe d'application constitué d'au moins un rouleau monté libre en rotation autour d'un arbre ; ledit dispositif est remarquable en ce qu'il comporte des moyens de marquage de l'élément adhésif à poser consistant en des picots s'étendant sensiblement radialement en faisant saillie des rouleaux, chaque picot coopérant avec des moyens élastiques aptes à déplacer lesdits picots depuis une première position active dans laquelle lesdits picots font saillie des rouleaux vers une position dite rétractée dans laquelle lesdits picots ne font pas saillie desdits rouleaux.

On comprend bien que lorsque les picots prennent appui sur l'élément adhésif, ces derniers restent en position active et, lorsque les picots prennent appui sur la tôle du véhicule, les picots se rétractent afin d'éviter de marquer la tôle.

Selon une première variante d'exécution, les picots sont solidaires d'une bande en élastomère tendue entre au moins trois galets tendeurs solidaires de la paroi proximale du rouleau ou d'une joue circulaire, de même diamètre que les rouleaux, montée sur l'arbre.

Selon une seconde variante d'exécution, lesdits picots sont solidaires d'une pièce polygonale en élastomère solidaire de la paroi proximale d'une joue circulaire, de même diamètre que les rouleaux, montée sur l'arbre, ladite pièce polygonale comportant un évidement central pour le passage de l'arbre.

De préférence, ladite pièce polygonale présente une forme de triangle isocèle.

Par ailleurs, l'élastomère consiste en un élastomère naturel et/ou synthétique.

De préférence, lesdits moyens de marquage consistent en des picots montés mobiles sur une couronne solidaire de la paroi proximale du rouleau ou d'une joue circulaire.

Ladite couronne comporte de préférence des trous radiaux traversant et des trous borgnes coaxiaux aux trous traversant pour former des épaulements dans lesquels sont logés des ressorts hélicoïdaux, la tête pointue des picots faisant saillie de la couronne et des rouleaux et prenant appui sur les ressorts hélicoïdaux, et la tige des picots traversant les ressorts hélicoïdaux, les trous traversant et les trous borgnes et comportant à son extrémité libre un filetage sur lequel est monté un écrou pour maintenir les picots sur la couronne.

Par ailleurs, le diamètre extérieur de la couronne est légèrement inférieur au diamètre extérieur des rouleaux.

De préférence, les trous radiaux traversant et les trous borgnes coaxiaux aux trous traversant sont uniformément répartis autour de la couronne.

De manière avantageuse, ledit rouleau est magnétique.

Par ailleurs, ledit arbre est de préférence solidarisé dans sa partie centrale à une tête solidaire de l'extrémité libre de l'organe de préhension par une liaison rotule et ledit arbre porte au moins deux rouleaux magnétiques montés libres en rotation autour dudit arbre et s'étendant de part et d'autre de ladite liaison rotule.

Ladite liaison rotule est constituée au moins d'un siège sensiblement sphérique formé dans la tête de l'organe d'application et dans lequel s'étend une sphère comportant un trou traversant diamétralement ladite sphère et dans lequel s'étend l'arbre (13) portant les rouleaux magnétiques.

Ladite liaison rotule comporte par ailleurs une pièce sensiblement cylindrique obtenue dans un élastomère et s'étendant entre le siège et la sphère de la liaison rotule.

Ledit arbre consiste en une tige cylindrique rectiligne.

Par ailleurs, le dispositif comporte à chacune des extrémités libre de l'arbre un disque obtenu dans du plastique ou dans un élastomère afin d'amortir les chocs.

De plus, lesdits picots présentent de préférence une forme conique.

Accessoirement, l'organe de préhension est constitué d'un manche comportant au moins deux parties, une partie dite proximale portant une poignée de préhension, et une partie dite distale reliée à la partie proximale par une pièce coudée et dont l'extrémité libre porte la tête de l'organe d'application.

Enfin, les rouleaux magnétiques présentent un champ magnétique compris entre 100 et 600 mT afin que ledit champ magnétique s'exerce à travers l'épaisseur de l'élément adhésif pour exercer une pression suffisante des rouleaux sur ledit élément adhésif et permettre le retrait des rouleaux magnétiques manuellement après l'application dudit élément adhésif.

### Brève description des dessins

D'autres avantages et caractéristiques ressortiront mieux de la description qui va suivre, de plusieurs variantes d'exécution, données à titre d'exemples non limitatifs, du dispositif d'application d'un élément adhésif sur une surface d'application métallique suivant l'invention, à partir des dessins annexés sur lesquels :
- la figure 1 est une vue en perspective éclatée d'un élément de toit destiné à être positionné sur un pavillon de toit d'un véhicule automobile au moyen d'un dispositif d'application suivant l'invention,
- la figure 2 est une vue de dessus d'un élément de toit destiné à être positionné sur un pavillon de toit d'un véhicule automobile au moyen d'un dispositif d'application suivant l'invention,
- la figure 3 est une vue en perspective du dispositif d'application suivant l'invention,
- la figure 4 est une vue de dessus du dispositif d'application suivant l'invention,
- la figure 5 est une vue en perspective arrière de la tête portant les rouleaux du dispositif d'application suivant l'invention,
- la figure 6 est une vue en perspective des rouleaux et des moyens de marquage de la tête du dispositif d'application suivant l'invention,
- la figure 7 est une vue en élévation de la tête portant les rouleaux et les moyens de marquage du dispositif d'application suivant l'invention,
- la figure 8 est une vue en élévation des rouleaux et des moyens de marquage du dispositif d'application suivant l'invention,
- la figure 9 est une vue en perspective d'une variante d'exécution de la tête portant les rouleaux et les moyens de marquage du dispositif d'application suivant l'invention,
- la figure 10 est une vue en perspective d'une seconde variante d'exécution de la tête portant les rouleaux et les moyens de marquage du dispositif d'application suivant l'invention,
- la figure 11 est une vue en élévation de la seconde variante d'exécution de la tête portant les rouleaux et des moyens de marquage du dispositif d'application suivant l'invention représentée sur la figure 10,
- la figure 12 est une vue en élévation de la tête portant les rouleaux et des moyens de marquage de la seconde variante d'exécution du dispositif d'application suivant l'invention représentée sur la figure 10,
- la figure 13 est représentation schématique en élévation d'un détail des moyens de marquage de la seconde variante d'exécution du dispositif d'application suivant l'invention représentée sur les figures 10 à 12.

### Mode de réalisation de l'invention

Par souci de clarté, dans la suite de la description, les mêmes éléments ont été désignés par les mêmes références aux différentes figures. De plus, les diverses vues ne sont pas tracées à l'échelle.

On décrira ci-après un dispositif d'application d'un raidisseur de toit cartonné comportant des bandes adhésives sur la face intérieure d'un pavillon de toit d'un véhicule automobile ; toutefois, il est bien évident que le dispositif d'application pourra être utilisé pour l'application de tout élément auto-adhésif obtenu dans un matériau quelconque, tel que du plastique, sur toute surface d'application métallique, telle qu'une porte d'un véhicule par exemple, sans pour autant sortir du cadre de l'invention.

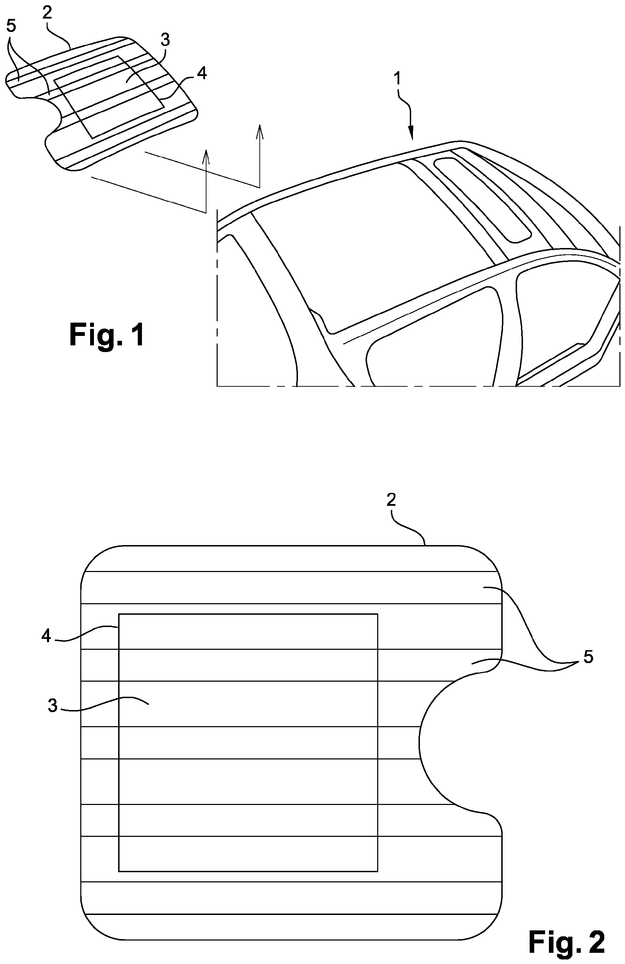

En référence aux figures 1 et 2, l'élément de toit, également appelé raidisseur de toit, pour améliorer la rigidité d'un pavillon de toit d'un véhicule 1 comporte une pièce sensiblement rectangulaire en carton ondulé 2 et une pièce amortissante 3, apte à absorber les vibrations et solidaires de la pièce rectangulaire en carton ondulé 2. La pièce sensiblement rectangulaire en carton ondulé 2 est obtenue dans du carton ondulé à double cannelure dans lequel est formé au moins un creux 4, ladite pièce amortissante 3 s'étendant dans ledit creux 4 de telle sorte que la face supérieure de ladite pièce amortissante affleure la face supérieure de la pièce rectangulaire en carton ondulé 2. Afin d'assurer la fixation du raidisseur de toit sur le pavillon de toit du véhicule 1, la pièce en carton ondulé 2 comporte une pluralité de bandes d'adhésif sensible à la pression 5 déposées sur la face supérieure de ladite pièce en carton ondulé 2.

On notera que le raidisseur de toit est conforme au raidisseur de toit décrit dans la demande de brevet français FR 3 011 519 de la demanderesse ; toutefois, il est bien évident que le raidisseur de toit pourra présenter une forme quelconque, comprendre une ou plusieurs pièces amortissantes, ne pas comprendre de pièce amortissante, et être obtenue dans un autre matériau que du carton ondulé sans pour autant sortir du cadre de l'invention.

Pour fixer le raidisseur de toit sur le pavillon de toit d'un véhicule 1, un opérateur introduit le raidisseur de toit par une ouverture latérale, par exemple une porte, puis il le positionne au droit de la zone du pavillon de toit 1 devant recevoir ledit raidisseur, avant de le plaquer sous le pavillon de toit. Ensuite, l'opérateur applique une pression sur ledit raidisseur de toit au moyen du dispositif d'application conforme à l'invention.

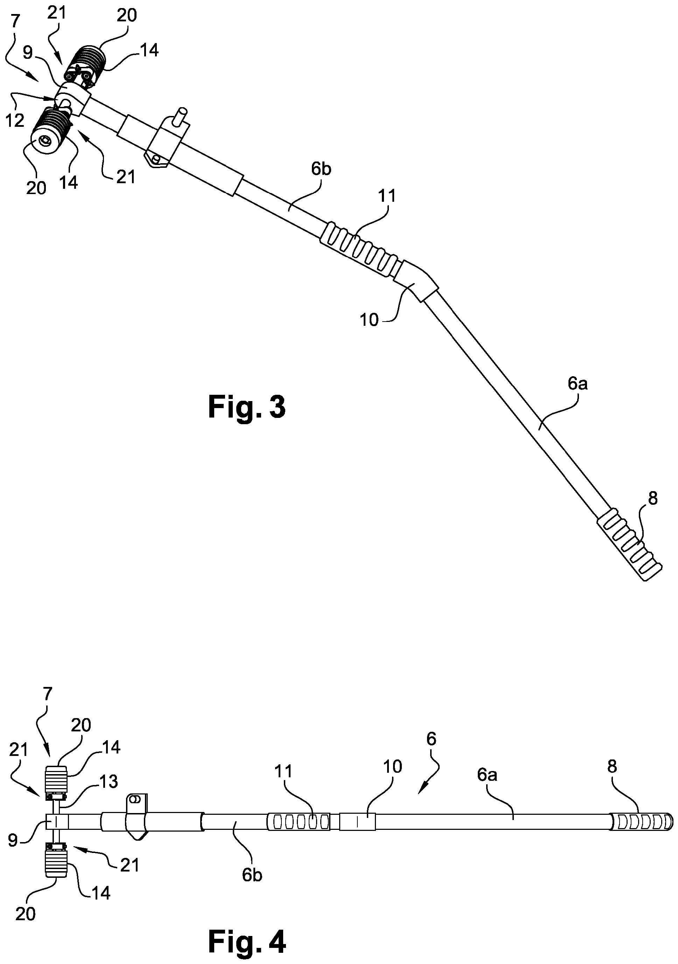

Ledit dispositif d'application suivant l'invention, en référence à la figure 3, est constitué d'un organe de préhension 6 et d'un organe d'application 7.

Ledit organe de préhension 6 est constitué d'un manche comportant deux parties 6a et 6b, une première partie dite proximale 6a portant une poignée de préhension 8, et une seconde partie dite distale 6b articulée à la partie proximale 6a et dont l'extrémité libre porte la tête 9 de l'organe d'application 7 comme il sera détaillé plus loin. Dans cet exemple particulier de réalisation, les parties proximale 6a et distale 6b sont constituées d'un tube cylindrique qui peut être obtenu dans tout matériau amagnétique, de préférence léger, tel que de l'aluminium ou du carbone par exemple, afin d'éviter toute fatigue pour l'opérateur le manipulant. La partie distale 6b est reliée à la partie proximale 6a par une pièce coudée 10 suivant un angle d'environ 120°. Afin de faciliter la préhension du manche, la partie proximale 6a comporte une seconde poignée 11 positionnée à proximité de ladite pièce coudée 10.

Il est bien évident que la pièce coudée 10 pourra être substituée par une articulation comportant avantageusement des moyens de blocage permettant de bloquer la partie proximale 6a dans une position angulaire déterminée par rapport à la partie distale 6b du manche 6. Par exemple, lesdits moyens de blocage pourront être constitués par un écrou formant l'axe de l'articulation et un boulon. Par ailleurs, il va de soi que le manche pourra présenter une forme et des dimensions quelconques et que les moyens de blocage de l'articulation 10 pourront consister dans tout moyen de blocage bien connu de l'homme du métier sans pour autant sortir du cadre de l'invention.

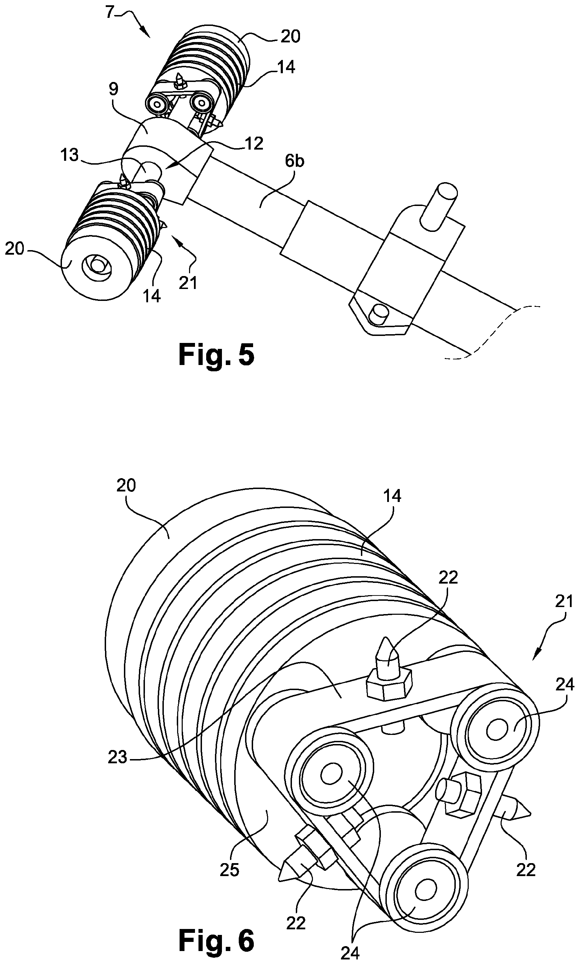

En référence aux figures 3 à 6, les moyens d'application 7 sont constitués d'une tête 9 solidaire de l'extrémité libre de la partie distale 6b du manche 6 et à laquelle est articulé par une liaison rotule 12, dans sa partie centrale, un arbre 13 présentant la forme d'une tige cylindrique rectiligne, s'étendant sensiblement perpendiculairement à la partie distale 6b du manche 6 et portant deux rouleaux magnétiques 14, lesdits rouleaux magnétiques 14 étant montés libre en rotation sur ledit arbre 13 et s'étendant de part et d'autre de ladite tête 9. On comprend bien que la liaison rotule 12 permet aux rouleaux 14 s'étendant de part et d'autre de ladite liaison rotule 12 d'assurer une pression constante sur l'élément adhésif même lorsque la surface d'application métallique est courbe, notamment concave lorsqu'il s'agit de la face intérieure du pavillon de toit. Les rouleaux magnétiques 14 sont montés libre en rotation sur l'arbre 13 au moyen de roulements 15.

Lesdits rouleaux magnétiques 14 présentent un champ magnétique compris entre 100 et 600 mT afin que ledit champ magnétique s'exerce à travers l'épaisseur de l'élément adhésif pour exercer une pression suffisante des rouleaux 14 sur ledit élément adhésif et permettre le retrait des rouleaux magnétiques manuellement après l'application dudit élément adhésif. On observera que la valeur du champ magnétique des rouleaux 14 pourra aisément être adaptée par l'homme du métier en fonction notamment de l'épaisseur de l'élément adhésif à appliquer, du matériau dans lequel est obtenu l'élément adhésif et du matériau magnétique de la surface d'application.

Dans cet exemple particulier de réalisation, les rouleaux magnétiques 14 sont des aimants permanents de forme cylindrique. Il est bien évident que chaque rouleau magnétique 14 pourra consister dans une pluralité d'aimants permanents de forme annulaire sans sortir du cadre de l'invention.

Accessoirement, le dispositif d'application suivant l'invention pourra comporter des moyens d'annulation de tout ou partie du champ magnétique des rouleaux magnétiques 14 afin de faciliter le retrait des rouleaux magnétiques 14 du pavillon de toit après l'application de l'élément adhésif sur ce dernier. Ces moyens d'annulation du champ magnétique pourront par exemple consister en une bobine connectée à une source d'alimentation en électricité, telle qu'une batterie par exemple, s'étendant à l'intérieur de l'arbre 13 et/ou de chaque rouleau 14, de telle manière que la circulation d'un courant prédéterminé procure l'annulation sensiblement complète du flux magnétique des rouleaux magnétiques. La circulation du courant à travers la bobine sera alors pilotée au moyen d'un interrupteur solidaire du manche du dispositif d'application.

Selon une variante d'exécution, non représentée sur les figures, lesdits rouleaux magnétiques 14 pourront consister dans des électro-aimants bien connus de l'homme du métier.

Ladite liaison rotule 12 est constituée d'un siège 16 sensiblement sphérique formé dans la tête 9 de l'organe d'application 7 et dans lequel s'étend une sphère 17 comportant un trou 18 traversant diamétralement ladite sphère 17 et dans lequel s'étend l'arbre 13 portant les rouleaux magnétiques 14. Par ailleurs, ladite liaison rotule 12 comporte une pièce sensiblement cylindrique 19 obtenue dans un élastomère et s'étendant entre le siège 16 et la sphère 17 de la rotule. Ainsi, la liaison rotule 12 est une rotule silentbloc, marque déposée, permettant de procurer un amortissement.

Il est bien évident que la liaison rotule pourra être substituée par toute autre liaison équivalente bien connue de l'homme du métier sans pour autant sortir du cadre de l'invention.

De manière avantageuse, le dispositif suivant l'invention comporte à chacune des extrémités libre de l'arbre 13 un disque 20 obtenu dans du plastique ou dans un élastomère afin d'amortir les chocs. De cette manière, l'opérateur évite d'endommager le pavillon de toit lorsque les rouleaux 14 font saillies du raidisseur de toit et viennent buter contre ledit pavillon de toit.

Par ailleurs, selon une caractéristique essentielle de l'invention, les deux rouleaux magnétiques 14 s'étendant de part et d'autre de la tête 9 de l'organe d'application 7 comportent des moyens de marquage 21 de l'élément adhésif à poser afin de permettre à l'opérateur de visualiser les zones sur lesquelles une pression a été appliquée et les zones où il doit passer pour que le collage soit parfait. Ces moyens de marquage consistent en des moyens de perforation de l'élément adhésif. Lesdits moyens de perforation consistent en des picots 22 et s'étendant sensiblement radialement en faisant saillie des rouleaux 14, chaque picot 22 présentant une forme conique, et coopérant avec des moyens élastiques aptes à déplacer lesdits picots depuis une première position active dans laquelle lesdits picots 22 font saillie des rouleaux 14 vers une position dite rétractée dans laquelle lesdits picots ne font pas saillies desdits rouleaux 14. De cette manière, en choisissant de manière idoine la raideur des moyens élastiques, les picots 22 restent dans leur position active lorsqu'une pression est exercée sur l'élément adhésif, tel qu'un raidisseur de toit en carton, ou similaire, afin de marquer les zones dudit élément adhésif, et lesdits picots passent dans leur position rétractée lorsque les picots 22 sont en contact avec la tôle du véhicule afin d'éviter d'endommager ladite tôle.

Il est bien évident que les picots 22 pourront présenter une forme quelconque, telle qu'une forme pyramidale par exemple, sans pour autant sortir du cadre de l'invention.

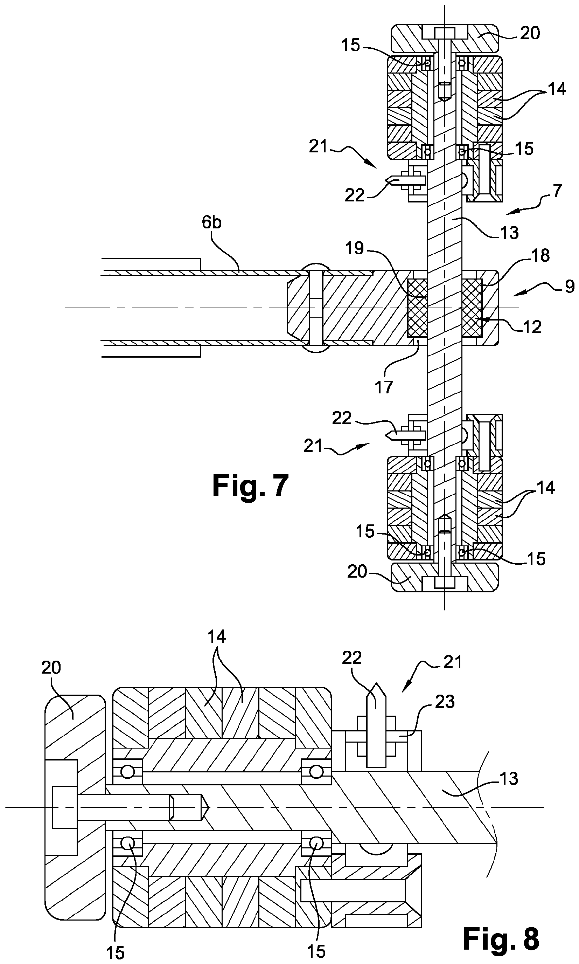

Selon une première variante d'exécution, en référence aux figures 4 à 8, lesdits moyens de marquage consistent en des picots 22 solidaires d'une bande en élastomère 23 tendue entre trois galets tendeurs 24 solidaires de la paroi proximale d'une joue circulaire 25, de même diamètre que les rouleaux 14, montée sur l'arbre 13. On entend par paroi proximale de la joue 25, la paroi de la joue 25 s'étendant au droit de la liaison rotule 12, la paroi distale de la joue 25 étant au contact des rouleaux 14. Dans cet exemple particulier de réalisation, les moyens de marquage comportent trois galets tendeurs 24 et trois picots 22 qui, en position de repos, s'étendent dans leur première position dite active, en saillie des rouleaux 14, chaque picot 22 s'étendant sensiblement radialement par rapport auxdits rouleaux 14, entre deux galets tendeurs 24 entre lesquels la bande en élastomère 23 est tendue. La bande en élastomère 23 est obtenue dans tout élastomère synthétique ou naturel bien connu de l'homme du métier, ce dernier choisissant aisément la raideur, i.e. l'élasticité de la bande élastomère, en fonction de la dureté de l'élément adhésif à appliquer.

Il est bien évident que les moyens de marquage 21 pourront comporter plus que trois galets tendeurs 24 et que lesdits galets tendeurs 24 pourront être directement solidaires des rouleaux 14 sans pour autant sortir du cadre de l'invention.

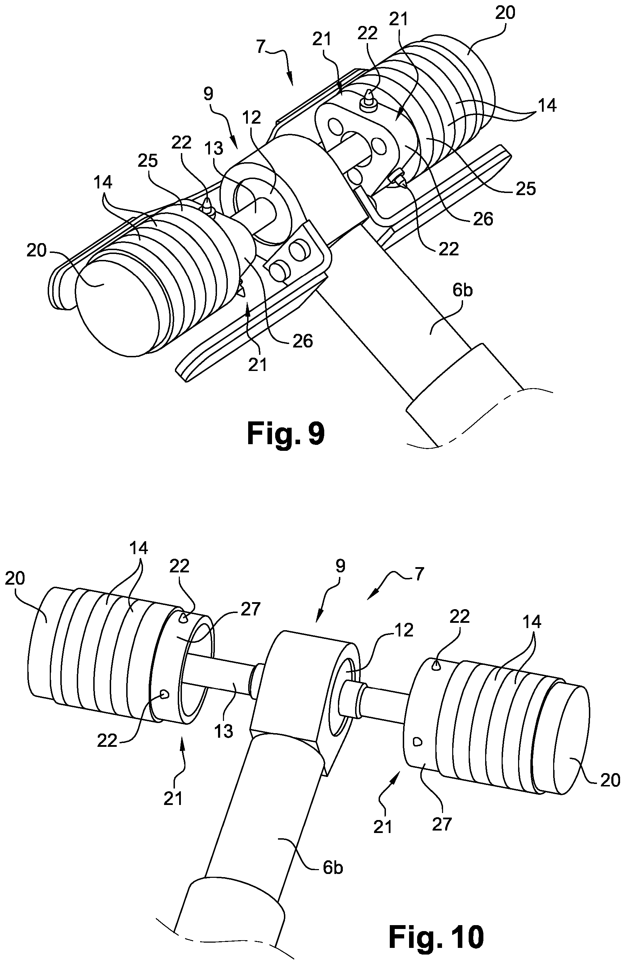

Selon une seconde variante d'exécution, en référence à la figure 9, lesdits moyens de marquage consistent en des picots 22 solidaires d'une pièce polygonale en élastomère 26 solidaire de la paroi proximale d'une joue circulaire 25, de même diamètre que les rouleaux 14, montée sur l'arbre 13, ladite pièce polygonale 26 comportant un évidement central pour le passage de l'arbre 13. Dans cet exemple particulier de réalisation, la pièce polygonale 26 présente une forme de triangle isocèle comportant dans la partie médiane de chaque côté du triangle un picot 22 qui, en position de repos, s'étend dans sa première position dite active, en saillie des rouleaux 14, chaque picot 22 s'étendant sensiblement radialement par rapport auxdits rouleaux 14. De la même manière que précédemment, la pièce polygonale 26est obtenue dans tout élastomère synthétique ou naturel bien connu de l'homme du métier, ce dernier choisissant aisément la raideur, i.e. l'élasticité de la pièce polygonale 26, en fonction de la dureté de l'élément adhésif à appliquer.

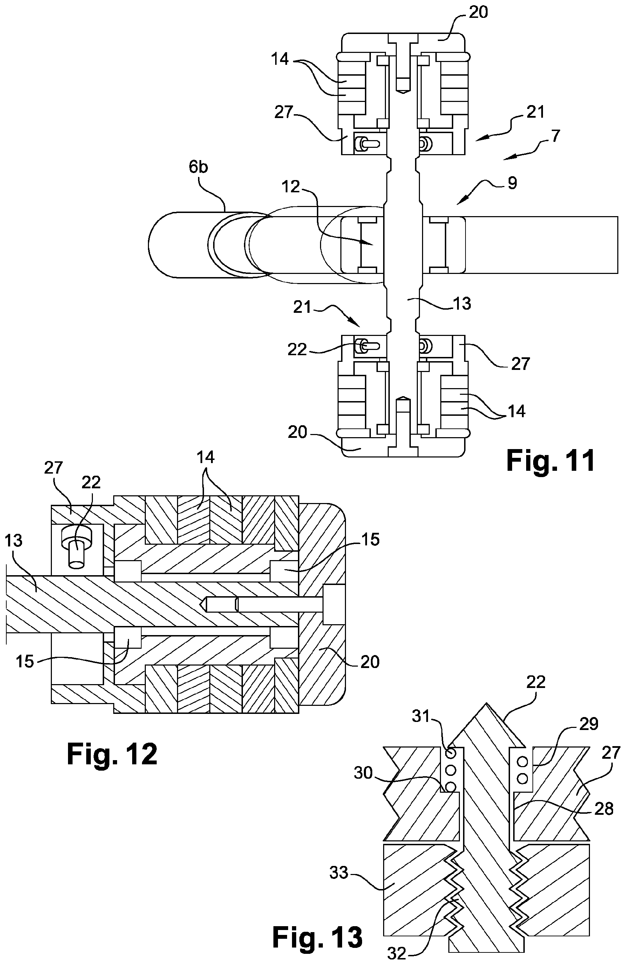

Selon une dernière variante d'exécution, en référence aux figures 10 à 13, lesdits moyens de marquage consistent en des picots 22 montés mobiles sur une couronne 27 solidaire de la paroi proximale d'une joue circulaire 25, de diamètre extérieur légèrement inférieur au diamètre extérieur des rouleaux 14. Ladite couronne 27 comporte des trous radiaux traversant 28, uniformément répartis autour de la couronne 27, et des trous borgnes 29 coaxiaux aux trous traversant 28 pour former des épaulements 30 dans lesquels sont logés des ressorts hélicoïdaux 31, ou similaires. La tête pointue des picots 22 fait saillie de la couronne 27 et des rouleaux 14 et prend appui sur les ressorts hélicoïdaux 31. La tige des picots 22 traverse les ressorts hélicoïdaux 31, les trous traversant 28 et les trous borgnes 29 et comporte à son extrémité libre un filetage 32 sur lequel est monté un écrou 33 pour maintenir les picots 22 sur la couronne 27. Ainsi, lorsque les picots prennent appui sur l'élément adhésif, ces derniers restent en position active et, lorsque les picots prennent appui sur la tôle du véhicule, les ressorts hélicoïdaux se compriment et les picots se rétractent dans les trous borgnes 29 afin d'éviter de marquer la tôle.

Il va de soi que les picots 22 pourront être substitués par des poinçons ou tout autre moyen de marquage sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Dispositif d'application d'un élément adhésif sur une surface d'application, notamment d'un raidisseur de toit auto-adhésif sur la face intérieure d'un pavillon de toit (1) d'un véhicule automobile, comprenant au moins un organe de préhension (6) et un organe d'application (7) constitué d'au moins un rouleau (14) monté libre en rotation autour d'un arbre (13), ***caractérisé* en ce qu'**il comporte des moyens de marquage (21) de l'élément adhésif à poser consistant en des picots (22) s'étendant sensiblement radialement en faisant saillie des rouleaux (14), chaque picot (22) coopérant avec des moyens élastiques aptes à déplacer lesdits picots depuis une première position active dans laquelle lesdits picots (22) font saillie des rouleaux (14) vers une position dite rétractée dans laquelle lesdits picots (22) ne font pas saillie desdits rouleaux (14).

2. Dispositif suivant la revendication 1 ***caractérisé* en ce que** les picots (22) sont solidaires d'une bande en élastomère (23) tendue entre au moins trois galets tendeurs (24) solidaires de la paroi proximale du rouleau (14) ou d'une joue circulaire (25), de même diamètre que les rouleaux (14), montée sur l'arbre (13).

3. Dispositif suivant la revendication 1 ***caractérisé* en ce que** les picots (22) sont solidaires d'une pièce polygonale en élastomère (26) solidaire de la paroi proximale d'une joue circulaire (25), de même diamètre que les rouleaux (14), montée sur l'arbre (13), ladite pièce polygonale (26) comportant un évidement central pour le passage de l'arbre (13).

4. Dispositif suivant la revendication 3 ***caractérisé* en ce que** la pièce polygonale (26) présente une forme de triangle isocèle.

5. Dispositif suivant la revendication 1 ***caractérisé* en ce que** lesdits moyens de marquage consistent en des picots (22) montés mobiles sur une couronne (27) solidaire de la paroi proximale du rouleau (14) ou d'une joue circulaire (25).

6. Dispositif suivant la revendication 5 ***caractérisé* en ce que** ladite couronne (27) comporte des trous radiaux traversant (28) et des trous borgnes (29) coaxiaux aux trous traversant (28) pour former des épaulements (30) dans lesquels sont logés des ressorts hélicoïdaux (31), la tête pointue des picots (22) faisant saillie de la couronne (27) et des rouleaux (14) et prenant appui sur les ressorts hélicoïdaux (31), et la tige des picots (22) traversant les ressorts hélicoïdaux (31), les trous traversant (28) et les trous borgnes (29) et comportant à son extrémité libre un filetage (32) sur lequel est monté un écrou (33) pour maintenir les picots (22) sur la couronne (27).

7. Dispositif suivant l'une quelconque des revendications 5 ou 6 ***caractérisé* en ce que** le diamètre extérieur de la couronne (27) est légèrement inférieur au diamètre extérieur des rouleaux (14).

8. Dispositif suivant l'une quelconque des revendications 6 ou7 ***caractérisé* en ce que** les trous radiaux traversant (28) et les trous borgnes (29) coaxiaux aux trous traversant (28) sont uniformément répartis autour de la couronne (27).

9. Dispositif suivant l'une quelconque des revendications 1 à 8 ***caractérisé* en ce que** ledit rouleau (14) est magnétique.

10. Dispositif suivant la revendication 9 ***caractérisé* en ce que** ledit arbre (13) est solidarisé dans sa partie centrale à une tête (9) solidaire de l'extrémité libre de l'organe de préhension (6) par une liaison rotule (12) et ledit arbre (13) porte au moins deux rouleaux magnétiques (14) montés libres en rotation autour dudit arbre (13) et s'étendant de part et d'autre de ladite liaison rotule (12).

11. Dispositif suivant la revendication 10 ***caractérisé* en ce que** ladite liaison rotule (12) est constituée au moins d'un siège (16) sensiblement sphérique formé dans la tête (9) de l'organe d'application (7) et dans lequel s'étend une sphère (17) comportant un trou (18) traversant diamétralement ladite sphère (17) et dans lequel s'étend l'arbre (13) portant les rouleaux magnétiques (14).

12. Dispositif suivant la revendication 11 ***caractérisé* en ce que** la liaison rotule (12) comporte une pièce sensiblement cylindrique (19) obtenue dans un élastomère et s'étendant entre le siège (16) et la sphère (17) de la liaison rotule (12).

13. Dispositif suivant l'une quelconque des revendications 10 à 12 ***caractérisé* en ce qu'**il comporte à chacune des extrémités libre de l'arbre un disque (20) obtenu dans du plastique ou dans un élastomère afin d'amortir les chocs.

14. Dispositif suivant l'une quelconque des revendications 1 à 10 ***caractérisé* en ce que** l'organe de préhension (6) est constitué d'un manche comportant au moins deux parties (6a,6b), une partie dite proximale (6a) portant une poignée de préhension (8), et une partie dite distale (6b) reliée à la partie proximale (6a) par une pièce coudée (10) et dont l'extrémité libre porte la tête (9) de l'organe d'application (7).

15. Dispositif suivant l'une quelconque des revendications 9 à 14 ***caractérisé* en ce que** les rouleaux magnétiques (14) présentent un champ magnétique compris entre 100 et 600 mT afin que ledit champ magnétique s'exerce à travers l'épaisseur de l'élément adhésif pour exercer une pression suffisante des rouleaux (14) sur ledit élément adhésif et permettre le retrait des rouleaux magnétiques (14) manuellement après l'application dudit élément adhésif.

## Patentansprüche

1. Vorrichtung zum Aufbringen eines Klebeelements auf eine Aufbringoberfläche, insbesondere einer selbstklebenden Dachversteifung auf die Innenseite eines Dachhimmels (1) eines Kraftfahrzeugs, mindestens ein Greiforgan (6) und ein Aufbringorgan (7) umfassend, das aus mindestens einer Rolle (14) besteht, welche frei drehbar um eine Welle (13) montiert ist, **dadurch *gekennzeichnet,* dass** sie Mittel zum Markieren (21) des anzubringenden Klebeelements beinhaltet, die aus Fortsätzen (22) bestehen, welche sich im Wesentlichen radial erstrecken, wobei sie aus den Rollen (14) herausragen, wobei jeder Fortsatz (22) mit elastischen Mitteln zusammenwirkt, die imstande sind, die Fortsätze aus einer ersten aktiven Position, in welcher die Fortsätze (22) aus den Rollen (14) herausragen, in eine als zurückgezogen bezeichnete Position zu bewegen, in welcher die Fortsätze (22) nicht aus den Rollen (14) herausragen.

2. Vorrichtung nach Anspruch 1, **dadurch *gekennzeichnet,* dass** die Fortsätze (22) fest mit einem Elastomerband (23) verbunden sind, das zwischen mindestens drei Spannwalzen (24) gespannt ist, welche fest mit der proximalen Wand der Rolle (14) oder mit einer kreisförmigen Wange (25) im selben Durchmesser wie die Rollen (14) verbunden sind, und an der Welle (13) montiert ist.

3. Vorrichtung nach Anspruch 1, **dadurch *gekennzeichnet,* dass** die Fortsätze (22) fest mit einem mehreckigen Stück aus Elastomer (26) verbunden sind, das fest mit der proximalen Wand einer kreisförmigen Wange (25) im selben Durchmesser wie die Rollen (14) verbunden ist und an der Welle (13) montiert ist, wobei das mehreckige Stück (26) eine mittige Aussparung zur Durchführung der Welle (13) beinhaltet.

4. Vorrichtung nach Anspruch 3, **dadurch *gekennzeichnet,* dass** das mehreckige Stück (26) die Form eines gleichschenkligen Dreiecks aufweist.

5. Vorrichtung nach Anspruch 1, **dadurch *gekennzeichnet,* dass** die Mittel zum Markieren aus Fortsätzen (22) bestehen, die beweglich auf einem Kranz (27) montiert sind, welcher fest mit der proximalen Wand der Rolle (14) oder mit einer kreisförmigen Wange (25) verbunden ist.

6. Vorrichtung nach Anspruch 5, **dadurch *gekennzeichnet,* dass** der Kranz (27) radiale Durchgangslöcher (28) und Sacklöcher (29) beinhaltet, die zu den Durchgangslöchern (28) koaxial sind, um Ansätze (30) zu bilden, in denen Spiralfedern (31) aufgenommen sind, wobei der spitze Kopf der Fortsätze (22) aus der Kranz (27) und aus den Rollen (14) herausragt, und sich an den Spiralfedern (31) anlegt, und wobei der Schaft der Fortsätze (22) durch die Spiralfedern (31), die Durchgangslöcher (28) und die Sacklöcher (29) verläuft, wobei er an seinem freien Ende ein Gewinde (32) beinhaltet, auf welchem eine Mutter (33) montiert ist, um die Fortsätze (22) auf dem Kranz (27) zu halten.

7. Vorrichtung nach einem der Ansprüche 5 oder 6, **dadurch *gekennzeichnet,* dass** der Außendurchmesser des Kranzes (27) geringfügig kleiner als der Außendurchmesser der Rollen (14) ist.

8. Vorrichtung nach einem der Ansprüche 6 oder 7, **dadurch *gekennzeichnet,* dass** die radialen Durchgangslöcher (28) und die Sacklöcher (29), welche koaxial zu den Durchgangslöchern (28) sind, gleichmäßig rund um den Kranz (27) herum verteilt sind.

9. Vorrichtung nach einem der Ansprüche 1 bis 8, **dadurch *gekennzeichnet,* dass** die Rolle (14) magnetisch ist.

10. Vorrichtung nach Anspruch 9, **dadurch *gekennzeichnet,* dass** die Welle (13) in ihrem mittleren Abschnitt fest mit einem Kopf (9) verbunden wird, der über eine Kugelgelenkverbindung (12) fest mit dem freien Ende des Greiforgans (6) verbunden ist, und die Welle (13) mindestens zwei magnetische Rollen (14) trägt, die frei um die Welle (13) drehbar montiert sind, und sich beiderseits der Kugelgelenkverbindung (12) erstrecken.

11. Vorrichtung nach Anspruch 10, **dadurch *gekennzeichnet,* dass** die Kugelgelenkverbindung (12) aus mindestens einem im Wesentlichen kugelförmigen Sitz (16) besteht, welcher im Kopf (9) des Aufbringorgans (7) ausgebildet ist und in welchem sich eine Kugel (17) erstreckt, die ein Loch (18) beinhaltet, welches diametral durch die Kugel (17) verläuft und in welchem sich die Welle (13) erstreckt, die die magnetischen Rollen (14) trägt.

12. Vorrichtung nach Anspruch 11, **dadurch *gekennzeichnet,* dass** die Kugelgelenkverbindung (12) ein im Wesentlichen zylindrisches Stück (19) beinhaltet, das in einem Elastomer erhalten wird, und sich zwischen dem Sitz (16) und der Kugel (17) der Kugelgelenkverbindung (12) erstreckt.

13. Vorrichtung nach einem der Ansprüche 10 bis 12, **dadurch *gekennzeichnet,* dass** sie an jedem der freien Enden der Welle eine Scheibe (20) beinhaltet, die in Kunststoff oder in einem Elastomer erhalten wird, um die Stöße dämpfen.

14. Vorrichtung nach einem der Ansprüche 1 bis 10, **dadurch *gekennzeichnet,* dass** das Greiforgan (6) aus einem Stiel besteht, der mindestens zwei Abschnitte (6a,6b) beinhaltet, wobei ein als proximal bezeichneter Abschnitt (6a) einen Greifhandgriff (8) trägt und ein als distal bezeichneter Abschnitt (6b) über ein abgewinkeltes Stück (10) mit dem proximalen Abschnitt (6a) verbunden ist, und dessen freies Ende den Kopf (9) des Aufbringorgans (7) trägt.

15. Vorrichtung nach einem der Ansprüche 9 bis 14, **dadurch *gekennzeichnet,* dass** die magnetischen Rollen (14) ein magnetisches Feld aufweisen, das zwischen 100 und 600 mT umfasst ist, damit dieses magnetische Feld durch die Dicke des Klebeelements hindurch wirkt, um einen ausreichenden Druck der Rollen (14) auf das Klebeelement auszuüben und es zu ermöglichen, die magnetischen Rollen (14) nach dem Aufbringen des Klebeelements von Hand zu entfernen.

## Claims

1. Device for applying an adhesive element on an application surface, in particular a self-adhesive roof stringer on the inner face of a roof panel (1) of a motor vehicle, comprising at least one gripping member (6) and an application member (7) formed by at least one roller (14) mounted to rotate freely about a shaft (13), ***characterised* in that** it comprises means for marking (21) the adhesive element to be placed which consist of pins (22) that extend substantially radially protruding from the rollers (14), each pin (22) engaging with elastic means capable of moving said pins from a first active position in which said pins (22) protrude from the rollers (14) to a retracted position in which said pins (22) do not protrude from said rollers (14).

2. Device according to claim 1, ***characterised* in that** the pins (22) are integral with an elastomer strip (23) stretched between at least three tension idlers (24) which are integral with the proximal wall of the roller (14) or to a circular end cap (25), of the same diameter as the rollers (14), mounted on the shaft (13).

3. Device according to claim 1, ***characterised* in that** the pins (22) are integral with a polygonal elastomer part (26), integral with the proximal wall of a circular end cap (25), of the same diameter as the rollers (14), mounted on the shaft (13), said polygonal part (26) comprising a central recess for the passage of the shaft (13).

4. Device according to claim 3, ***characterised* in that** the polygonal part (26) has an isosceles triangle shape.

5. Device according to claim 1, ***characterised* in that** said marking means consist of pins (22) which are mounted to be mobile on a crown (27) integral with the proximal wall of the roller (14) or to a circular end cap (25).

6. Device according to claim 5, ***characterised* in that** said crown (27) comprises radial through holes (28) and blind holes (29) which are coaxial to the through holes (28) to form shoulders (30) in which helical springs (31) are accommodated, the pointed head of the pins (22) protruding from the crown (27) and from the rollers (14) and bearing on the helical springs (31), and the stem of the pins (22) passing through the helical springs (31), the through holes (28) and the blind holes (29), and comprising, at the free end thereof, a thread (32) on which a nut (33) is mounted for holding the pins (22) on the crown (27).

7. Device according to any one of claims 5 or 6, ***characterised* in that** the outer diameter of the crown (27) is slightly smaller than the outer diameter of the rollers (14).

8. Device according to any one of claims 6 or 7, ***characterised* in that** the radial through holes (28) and the blind holes (29) coaxial to the through holes (28) are evenly distributed around the crown (27).

9. Device according to any one of claims 1 to 8, ***characterised* in that** said roller (14) is magnetic.

10. Device according to claim 9, ***characterised* in that** said shaft (13) is integral in the central portion thereof with a head (9) integral with the free end of the gripping member (6) by a ball joint (12) and said shaft (13) supports at least two magnetic rollers (14) mounted to rotate freely about said shaft (13) and extending on either side of said ball joint (12).

11. Device according to claim 10, ***characterised* in that** said ball joint (12) is formed at least by a substantially spherical seat (16) formed in the head (9) of the application member (7) and into which extends a sphere (17) comprising a hole (18) diametrically passing through said sphere (17) and into which the shaft (13) extends supporting the magnetic rollers (14).

12. Device according to claim 11, ***characterised* in that** the ball joint (12) comprises a substantially cylindrical part (19) made from an elastomer and extending between the seat (16) and the sphere (17) of the ball joint (12).

13. Device according to any one of claims 10 to 12, ***characterised* in that** it comprises, at each of the free ends of the shaft, a disc (20) made of plastic or made of an elastomer in order to absorb shock.

14. Device according to any one of claims 1 to 10, ***characterised* in that** the gripping member (6) is formed by a sleeve comprising at least two portions (6a,6b), one proximal portion (6a) supporting a gripping handle (8), and one distal portion (6b) connected to the proximal portion (6a) by a bent part (10) and the free end of which supports the head (9) of the application member (7).

15. Device according to any one of claims 9 to 14, ***characterised* in that** the magnetic rollers (14) have a magnetic field comprised between 100 and 600 mT such that said magnetic field exerts through the thickness of the adhesive element to exert sufficient pressure from the rollers (14) on said adhesive element and to make it possible to remove the magnetic rollers (14) manually after the application of said adhesive element.
